**Europäisches Patentamt**

**European Patent Office**

**Office européen des brevets**

(19)

(11) Veröffentlichungsnummer: **0 023 692**
**B1**

# (12) EUROPÄISCHE PATENTSCHRIFT

(45) Veröffentlichungstag der Patentschrift:
29.06.83

(21) Anmeldenummer: **80104431.4**

(22) Anmeldetag: **28.07.80**

(51) Int. Cl.³: **H 04 M 11/06**, H 04 M 19/08

(54) Schaltungsanordnung zum Anschliessen einer Übertragungseinrichtung eines Modems an eine Fernsprechleitung.

(30) Priorität: **02.08.79 DE 2931464**

(43) Veröffentlichungstag der Anmeldung:
**11.02.81 Patentblatt 81/6**

(45) Bekanntmachung des Hinweises auf die Patenterteilung:
**29.06.83 Patentblatt 83/26**

(84) Benannte Vertragsstaaten:
**AT BE CH FR GB IT LI LU NL SE**

(56) Entgegenhaltungen:
**DE-B-2 814 837**
**FR-A-2 281 019**

**Technische Mitteilungen AEG-Telefunken, vol. 69, 1979, Nr. 4, Berlin, DE Bambach et al. «Bildschirmtext-Beschreibung des Teilnehmergerätes und der Daten-übertragunseinrichtung», Seiten 136–140.**

(73) Patentinhaber: **SIEMENS AKTIENGESELLSCHAFT, Berlin und München Wittelsbacherplatz 2, D-8000 München 2 (DE)**

(72) Erfinder: **Sailer, Heinrich, Dipl.-Ing., Michlbauerstrasse 3,, D-8021 Neuried (DE)**
Erfinder: **Vogeler, Torsten, Dipl.-Ing., Wiener Strasse 6, D-8023 Pullach (DE)**

## Schaltungsanordnung zum Anschliessen einer Übertragungseinrichtung eines Modems an eine Fernsprechleitung

Die Erfindung bezieht sich auf eine Schaltungsanordnung zum Anschliessen einer Übertragungseinrichtung eines Modems an eine Fernsprechleitung, bei der die Übertragunseinrichtung den zu sendenden und empfangenen Daten zugeordnete Datensignale erzeugt bzw. empfängt, bei der die Betriebsspannung des Modems unter Verwendung einer Regelstufe aus dem Schleifenstrom der Fernsprechleitung erzeugt wird und bei der Wählimpulse durch Unterbrechungen der Fernsprechleitung mittels eines Schalters erzeugt werden.

Eine derartige Schaltungsanordnung ist aus der DE-AS 2 814 837 bereits bekannt. Bei dieser bekannten Schaltungsanordnung ist die Übertragungseinrichtung des Modems nach dem Trennen der Fernsprechleitung von einem angeschlossenen Fernsprechapparat und dem Verbinden der Fernsprechleitung mit dem Modem mit der Fernsprechleitung verbunden. Zwischen den Adern der Fernsprechleitung ist eine Stromversorgungseinrichtung vorgesehen, die mit einer Regelstufe zum Erzeugen einer konstanten Betriebsspannung des Modems versehen ist. In einer Ader der Fernsprechleitung ist ein Schalter vorgesehen, der bei einer Wahl eines fernen Teilnehmers entsprechend den Wählimpulsen geöffnet und geschlossen wird. Ein derartiger Schalter wird üblicherweise als nsi-Kontakt bezeichnet. Zwischen dem nsi-Kontakt und der Übertragungseinrichtung bzw. der Stromversorgungseinrichtung des Modems ist zwischen den Adern der Fernsprechleitung ein weiterer Schalter vorgesehen, der üblicherweise als nsa-Kontakt bezeichnet wird und der während der Wahl geschlossen ist.

Bei einer Speisung des Modems aus dem Schleifenstrom der Fernsprechleitung muss die Stromversorgungseinrichtung auch während der Wahl eine Betriebsspannung abgeben, die grösser ist als eine für den Betrieb des Modems erforderliche kleinste Betriebsspannung. Es wäre denkbar, in der Stromversorgungseinrichtung der Regelstufe einen Energiespeicher, beispielsweise einen Kondensator nachzuschalten, dessen Kapazität so gross ist, dass der Modem auch bei geöffnetem nsi-Kontakt bzw. geschlossenem nsa-Kontakt noch mit einer ausreichenden Betriebsspannung versorgt werden kann. Weiterhin müssen in der Stromversorgungseinrichtung Vorkehrungen getroffen werden, die verhindern, dass die Datensignale durch die Regelstufe kurzgeschlossen werden.

Der Erfindung liegt daher die Aufgabe zugrunde, eine Schaltungsanordnung zum Anschliessen von Übertragungseinrichtungen eines Modems an eine Fernsprechleitung anzugeben, die einerseits ein Kurzschliessen der Datensignale durch die Regelstufe verhindert und die einen Betrieb der Regelstufe auch während der Erzeugung der Wählimpulse ermöglicht.

Erfindungsgemäss wird die Aufgabe bei der Schaltungsanordnung der eingangs genannten Art dadurch gelöst, dass eine einerseits mit der Fernsprechleitung und anderseits mit der Regelstufe und der Übertragungseinrichtung verbundene Frequenzweiche vorgesehen ist, die eine für die Datensignale durchlässige, galvanisch getrennte Verbindung zwischen der Fernsprechleitung und der Übertragungseinrichtung herstellt und die eine die Datensignale sperrende und für die Wählimpulse durchlässige galvanische Verbindung zwischen der Fernsprechleitung und der Regelstufe herstellt.

Die Schaltungsanordnung gemäss der Erfindung hat den Vorteil, dass der Energiespeicher in der Stromversorgung verhältnismässig klein ausgelegt werden kann, da er auch während des Auftretens der Wählimpulse aufgeladen wird. Weiterhin ist bei der Schaltungsanordnung kein dem nsa-Kontakt entsprechender Schalter erforderlich.

Die Schaltungsanordnung erfordert einen besonders geringen Aufwand, wenn die Frequenzweiche eine zwischen der Fernsprechleitung und der Regelstufe angeordnete Spule, einen zwischen der Fernsprechleitung und den Übertragungseinrichtungen angeordneten Kondensator und eine parallel zur Spule angeordnete Serienschaltung aus zwei entgegengesetzt gepolten Zenerdioden enthält.

Um die Schaltungsanordnung unabhängig von der Polarität des Schleifenstroms zu betreiben ist es vorteilhaft, wenn der Frequenzweiche ein als Zweiweggleichrichter ausgebildeter Gleichrichter vorgeschaltet ist.

Um einen Anreizzustand für ein elektronisches Vermittlungssystem schaffen zu können, an den die Fernsprechleitung angeschlossen ist, ist es günstig, wenn die Fernsprechleitung, nach dem die Wählimpulse erzeugende Schalter durch einen Widerstand überbrückt ist.

Es wäre denkbar, den die Wählimpulse erzeugenden Schalter als Transistor auszubilden, jedoch erweist es sich für die Erzeugung des Anreizzustands als zweckmässig, wenn als Schalter der Kontakt eines Relais vorgesehen ist, dessen Erregungsspannung einem der Regelstufe nachgeschalteten Energiespeicher entnommen wird.

Ein mit den Merkmalen der Erfindung ausgestattetes Ausführungsbeispiel der Schaltungsanordnung wird im folgenden anhand von Zeichnungen näher erläutert.

Es zeigen:

Fig. 1 ein Blockschaltbild der Schaltungsanordnung,

Fig. 2 ein Schaltbild der Schaltungsanordnung.

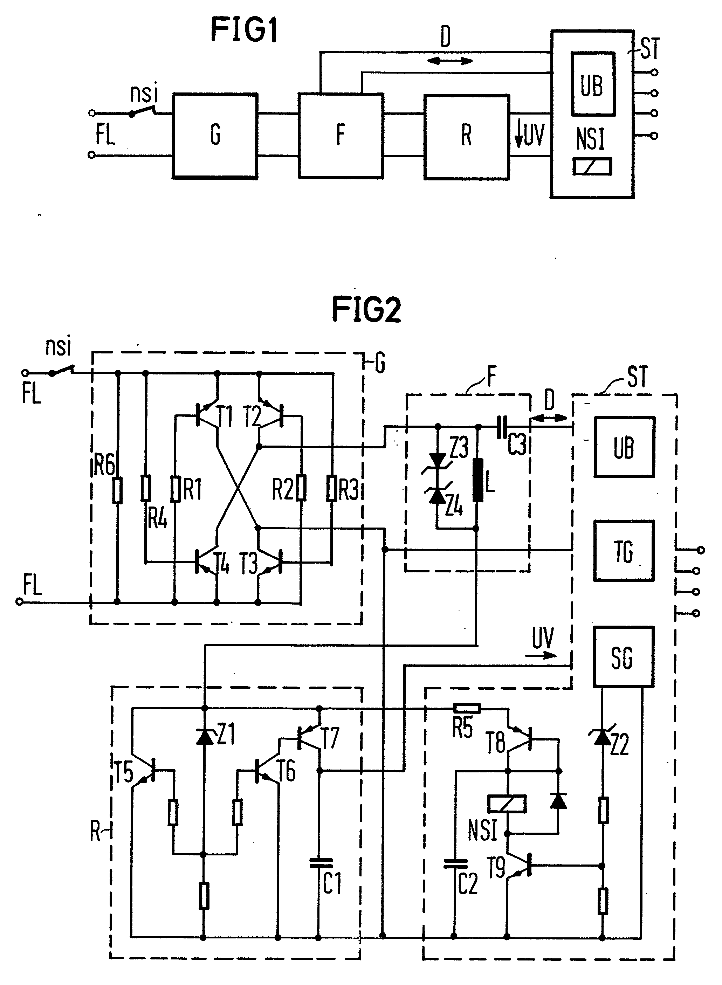

Bei der in Fig. 1 dargestellten Schaltungsanordnung ist in einer Ader einer Fernsprechleitung FL ein Schalter nsi angeordnet, der bei der Wahl eines fernen Teilnehmers entsprechend den Wählimpulsen geöffnet und geschlossen wird. Dem Schalter nsi ist ein Zweiweggleichrichter G nachgeschaltet, um die Schaltungsanordnung unabhängig von der Polarität des Schleifenstroms in der Fernsprechleitung FL betreiben zu können. Die Fernsprechleitung FL ist über den Gleichrichter G und eine Frequenzweiche F einerseits mit einer Regelstufe R verbunden, die eine Betriebsspannung UV für den Modem erzeugt und anderseits mit einer Übertragungseinrichtung UB des Modems verbunden. Die Übertragungseinrichtung UB wird als bekannt vorausgesetzt. Sie enthält die Einrichtungen zur Filterung, Modulation und Demodulation von über die Fernsprechleitung FL übertragenen Datensignalen D. Die Übertragungseinrichtung UB wird als Bestandteil einer Steuereinheit ST angesehen, die ausserdem Steuergeräte zum Steuern des zeitlichen Ablaufs der Übertragung der Datensignale D, einen Taktgeber zum Erzeugen von Taktimpulsen sowie eine Anordnung enthält, die bei der Wahl des fernen Teilnehmers den Schalter nsi betätigt. Der Schalter nsi ist zweckmässiger Weise als Kontakt eines Relais NSI ausgebildet, das in der Steuereinheit ST angeordnet ist. An die Steuereinheit ST ist über Schnittstellenleitungen ein Endgerät angeschlossen.

Beim Anschliessen der Übertragungseinrichtung UB und der Regelstufe R an die Fernsprechleitung FL muss einerseits beachtet werden, dass die Datensignale D durch die Regelstufe R nicht kurzgeschlossen werden. Anderseits soll die Übertragungseinrichtung UB galvanisch von der Fernsprechleitung getrennt sein. Weiterhin sollen auch die Wählimpulse der Regelstufe R zugeführt werden, um einen in der Regelstufe R vorgesehenen Energiespeicher während der Wahl nicht zu sehr zu entladen, sondern auch die Wählimpulse für die Erzeugung der Betriebsspannung UV heranzuziehen.

Weitere Einzelheiten der Schaltungsanordnung werden zusammen mit dem in Fig. 2 dargestellten Schaltbild beschrieben.

Bei der in Fig. 2 dargestellten Schaltungsanordnung erzeugt der als Zweiweggleichrichter ausgebildete Gleichrichter G aus dem Schleifenstrom der Fernsprechleitung FL bei geschlossenem Kontakt nsi eine Gleichspannung mit einer von der Polarität des Schleifenstroms unabhängigen Polarität. Der Gleichrichter G enthält als Gleichrichterelemente Transistoren T1 bis T4, die durch Widerstände R1 bis R4 in Abhängigkeit von der Polarität des Schleifenstroms leitend gesteuert werden. Die Spannung am Ausgang des Gleichrichters G wird über eine Spule L der Regelstufe R zugeführt. Die Regelstufe R ist als Parallelregler ausgebildet und sie enthält einen Transistor T5, der immer dann leitend gesteuert wird, wenn die zwischen seinem Kollektor und seinem Emitter anliegende Spannung, die der Betriebsspannung UV zugeordnet ist, einen Wert annimmt, der grösser ist als eine durch eine Zenerdiode Z1 festgelegte Bezugsspannung.

Gleichzeitig mit dem Transistor T5 wird ein Transistor T6 leitend gesteuert, der seinerseits einen Transistor T7 leitend steuert und damit die vom Gleichrichter G abgegebene Spannung als Betriebsspannung UV zu einem als Energiespeicher dienenden Kondensator C1 und zur Steuereinheit ST durchschaltet. Wenn die am Transistor T5 anliegende Spannung kleiner ist als die durch die Zenerdiode Z1 vorgegebene Bezugsspannung, werden die Transistoren T5 bis T7 gesperrt. Auf diese Weise wird sichergestellt, dass bei kurzzeitigen Unterbrechungen des Schleifenstroms, beispielsweise während der Erzeugung der Wählimpulse der Kondensator C1 nicht zusätzlich durch die Regelstufe R selbst entladen wird. Die am Transistor T5 anliegende Spannung wird über einen Widerstand R5 und einen als Diode geschalteten Transistor T8 einem weiteren als Energiespeicher dienenden Kondensator C2 zugeführt.

Während der Wahl eines fernen Teilnehmers erzeugt ein Signalgeber SG in der Steuereinheit ST den Wählimpulsen zugeordnete Impulse, die über eine Zenerdiode Z2 einem Transistor T9 zugeführt werden. Der Transistor T9 ist eine Serie mit dem Relais NSI und parallel zum Kondensator C2 angeordnet. Beim Auftreten eines Impulses wird der Transistor T9 leitend gesteuert und aus dem Kondensator C2 wird ein Erregerstrom für das Relais NSI entnommen. Mit dem Erregen des Relais NSI wird der Kontakt nsi geöffnet und die Fernsprechleitung FL wird unterbrochen. In der Regelstufe R werden damit die Transistoren T5 bis T7 gesperrt und eine Entladung des Kondensators C1 durch die Regelstufe R selbst wird verhindert. Wenn der Transistor T9 wieder gesperrt wird, wird die Erregung des Relais NSI beendet und der Kontakt nsi wird zur Erzeugung des ersten Wählimpulses wieder geschlossen. Damit werden die Transistoren T5 bis T7 wieder leitend gesteuert und der Kondensator C1 wird wieder aufgeladen. Gleichzeitig wird auch der Kondensator C2 wieder aufgeladen.

Um eine Verzerrung der Wählimpulse durch die Spule L in der Frequenzweiche F zu verhindern, ist parallel zu dieser eine Serienschaltung aus zwei entgegengesetzt gepolten Zenerdioden Z3 und Z4 angeordnet, über die unmittelbar nach dem Ende der Impulspause der Wählimpulse der ansteigende Schleifenstrom zunächst zur Regelstufe R fliesst. Wenn die Spannung am Ausgang des Gleichrichters G grösser ist als die Zenerspannungen der Zenerdioden Z3 und Z4 übernimmt die Spule L den Schleifenstrom. Es wäre auch denkbar, die Spule L während der Wahl durch einen dem Kontakt nsi entsprechenden Kontakt zu überbrücken. Die Verwendung der Zenerdioden Z3 und Z4 erfordert jedoch einen wesentlich geringeren Aufwand.

In entsprechender Weise wie der erste Wählimpuls werden die weiteren Wählimpulse durch das Relais NSI bzw. die Kontakte nsi erzeugt.

Wenn bei erfolgter Verbindung nach der Wahl Daten zwischen den Teilnehmern übertragen werden, muss sichergestellt sein, dass die in der Übertragungseinrichtung UB erzeugten oder empfangenen Datensignale D durch die Regelstufe R nicht kurzgeschlossen werden. Zu diesem Zweck ist in der Frequenzweiche F die Spule L vorgesehen. Die Spule L ermöglicht jedoch, wie bereits beschrieben, eine galvanische Verbindung zwischen der Fernsprechleitung FL und der Regelstufe R für die Erzeugung der Betriebsspannung UV des Modems. Anderseits ist zwischen der Fernsprechleitung und der Übertragungseinrichtung UB eine für die Datensignale D durchlässige, jedoch eine galvanisch getrennte Verbindung erforderlich. Diese Verbindung wird durch die Verwendung des Kondensators C3 erreicht.

Bei elektronischen Vermittlungssystemen ist es erforderlich, dass in dem Modem ein Anreizzustand eingestellt werden kann. Dieser Anreizzustand erfordert einen Eingangswiderstand des Modems von 1,5 kOhm und einen Eingangsstrom von 100 µA. Zum Erreichen dieses Anreizzustands erfolgt die Erzeugung der Wählimpulse nicht unter Verwendung eines als Schalter verwendeten Transistors, sondern als Kontakt nsi des Relais NSI. Der geforderte Widerstandswert wird durch einen zwischen den Adern der Fernsprechleitung FL angeordneten Widerstand R6 erreicht.

## Patentansprüche

1. Schaltungsanordnung zum Anschliessen einer Übertragungseinrichtung (UB) eines Modems an eine Fernsprechleitung (FL), bei der die Übertragungseinrichtung (UB) den zu sendenden und empfangenen Daten zugeordnete Datensignale (D) erzeugt bzw. empfängt, bei der die Betriebsspannung (UV) des Modems unter Verwendung einer Regelstufe (R) aus dem Schleifenstrom der Fernsprechleitung (FL) erzeugt wird und bei der Wählimpulse durch Unterbrechungen der Fernsprechleitung (FL) mittels eines Schalters (nsi) erzeugt werden, dadurch gekennzeichnet, dass eine einerseits mit der Fernsprechleitung (FL) und anderseits mit der Regelstufe (R) und der Übertragungseinheit (UB) verbundene Frequenzweiche (F) vorgesehen ist, die eine für die Datensignale (D) durchlässige, galvanisch getrennte Verbindung zwischen der Fernsprechleitung (FL) und der Übertragungseinrichtung (UB) herstellt und die eine die Datensignale (D) sperrende und für die Wählimpulse durchlässige galvanische Verbindung zwischen der Fernsprechleitung (FL) und der Regelstufe (R) herstellt.

2. Schaltungsanordnung nach Anspruch 1, dadurch gekennzeichnet, dass die Frequenzweiche (F) eine zwischen der Fernsprechleitung (FL) und der Regelstufe (R) angeordnete Spule (L), einen zwischen der Fernsprechleitung (FL) und der Übertragungseinheit (UB) angeordneten Kondensator (C3) und eine parallel zur Spule (L) angeordnete Serienschaltung aus zwei entgegengesetzt gepolten Zenerdioden (Z3, Z4) enthält.

3. Schaltungsanordnung nach Anspruch 1 oder Anspruch 2, dadurch gekennzeichnet, dass der Frequenzweiche (F) ein als Zweiweggleichrichter ausgebildeter Gleichrichter (G) vorgeschaltet ist.

4. Schaltungsanordnung nach einem der Ansprüche 1 bis 3, dadurch gekennzeichnet, dass die Fernsprechleitung (FL) nach dem die Wählimpulse erzeugenden Schalter (nsi) durch einen Widerstand (R6) überbrückt ist.

5. Schaltungsanordnung nach einem der Ansprüche 1 bis 4, dadurch gekennzeichnet, dass als Schalter der Kontakt (nsi) eines Relais (NSI) vorgesehen ist, dessen Erregungsspannung einem der Regelstufe (R) nachgeschalteten Energiespeicher (C2) entnommen wird.

## Claims

1. Circuit arrangement for connecting a transmission device (UB) of a modem to a telephone line (FL), wherein the transmission device (UB) generates or receives, as the case may be, data signals (D) assigned to the data to be transmitted and received, and wherein the operating voltage (UV) of the modem is produced from the loop current of the telephone line (FL) using a regulating stage (R), and wherein dialling pulses are produced by means of interruptions of the telephone line (FL) via a switch (nsi), characterised in that there is provided a frequency separating filter (F) which on the one hand is connected to the telephone line (FL) and on the other hand to the regulating stage (R) and to the transmission unit (UB) and which establishes a connection between the telephone line (FL) and the transmission device (UB) that is D.C. isolated and permeable to the data signals (D), and which frequency separating filter establishes a D.C. connection between the telephone line (FL) and the regulating stage (R) which is permeable to the dialling pulses and blocks the data signals (D).

2. Circuit arrangement as claimed in claim 1, characterised in that the frequency separating filter (F) comprises a coil (L) arranged between the telephone line (FL) and the regulating stage (R), and comprises a capacitor (C3) arranged between the telephone line (FL) and the transmission unit (UB) and comprises a series connection which consists of two oppositely poled Zener diodes (Z3, Z4) and is arranged in parallel with the coil (L).

3. Circuit arrangement as claimed in claim 1 or claim 2, characterised in that a rectifier (G) designed as a full-wave rectifier is connected preceding the frequency separating filter (F).

4. Circuit arrangement as claimed in one of claims 1 to 3, characterised in that the telephone line (FL) is bridged by a resistor (R6) following the switch (nsi) which produces the dialling pulses.

5. Circuit arrangement as claimed in one of claims 1 to 4, characterised in that the contact (nsi) of a relay (NSI), whose excitation voltage is drawn from an energy store (C2) connected following the regulating stage (R), is provided as a switch.

## Revendications

1. Circuit pour brancher un dispositif de transmission (UB) d'un modem sur une ligne téléphonique (FL), dans lequel le dispositif de transmission (UB) produit ou reçoit des signaux de données (D) associés à des données devant être émises et reçues, dans lequel la tension de service (UV) de modem est produite, moyennant l'utilisation d'un étage de régulation (R) à partir du circuit de boucle de la ligne téléphonique (FL) et dans lequel des impulsions de sélection sont produites par des interruptions de la ligne téléphonique (FL) au moyen d'un commutateur (nsi), caractérisé en ce qu'il est prévu un diplexeur (F) relié d'une part à la ligne téléphonique (FL) et d'autre part à l'étage de régulation (R) et à l'unité de transmission (UB) et qui établit, entre la ligne téléphonique (FL) et le dispositif de transmission (UB), une liaison qui laisse passer les signaux de données (D) et est séparée galvaniquement, et qui établit entre la ligne téléphonique (FL) et l'étage de régulation (R), une liaison galvanique, bloquant les signaux de données (D) et laissant passer les impulsions de sélection.

2. Circuit selon la revendication 1, caractérisé en ce que le diplexeur (F) contient une bobine (L) disposée entre la ligne téléphonique (FL) et l'étage de régulation (R), un condensateur disposé entre la ligne téléphonique (FL) et l'unité de transmission (UB), et un circuit série formé de deux diodes Zener (Z3, Z4) polarisées en opposition et monté en parallèle sur la bobine (L).

3. Circuit selon la revendication 1 ou la revendication 2, caractérisé en ce qu'un redresseur (G) constitué par un redresseur à deux alternances est branché en série et en amont du diplexeur (F).

4. Circuit selon l'une des revendications 1 à 3, caractérisé en ce que la ligne téléphonique (FL) est shuntée par une résistance (R6) en aval du commutateur (nsi) produisant les impulsions de sélection.

5. Montage selon l'une des revendications 1 à 4, caractérisé en ce qu'il est prévu, comme commutateur, le contact (nsi) d'un relais (NSI), dont la tension d'excitation est prélevée d'un accumulateur d'énergie (C2) branché en série et en aval de l'étage de régulation (R).

# FIG1

# FIG2